Europäisches Patentamt

European Patent Office

Office européen des brevets

(11) Numéro de publication: **0 390 699**

**A1**

## (12) DEMANDE DE BREVET EUROPEEN

(21) Numéro de dépôt: **90400879.4**

(22) Date de dépôt: **30.03.90**

(51) Int. Cl.⁵: **H05B 41/29**

(30) Priorité: **31.03.89 FR 8904308**
        **24.11.89 FR 8915486**

(43) Date de publication de la demande:
      **03.10.90 Bulletin 90/40**

(84) Etats contractants désignés:
      **DE ES FR GB IT NL SE**

(71) Demandeur: **VALEO VISION**
      **17, rue Henri Gautier**
      **F-93012 Bobigny Cédex(FR)**

(72) Inventeur: **Albou, Pierre**
      **16, rue Boussingault**
      **F-75013 Paris(FR)**
      Inventeur: **Leleve, Joel**
      **7, Villa Renée**
      **F-93800 Epinay-Sur-Seine(FR)**

(74) Mandataire: **Martin, Jean-Jacques et al**
      **Cabinet REGIMBEAU 26, Avenue Kléber**
      **F-75116 Paris(FR)**

(54) **Circuit d'alimentation d'une lampe à arc, notamment pour un projecteur de véhicule automobile.**

(57) L'invention concerne un circuit d'alimentation pour une lampe à arc caractérisé en ce qu'il comprend :
des moyens ($L_1$, $C_1$, $T_1$, $C_2$, $T_2$) pour engendrer, à partir d'une source de basse tension continue telle que la batterie du véhicule, une tension alternative d'amplitude variable en fonction de l'état de la lampe, et
un transformateur (T) élévateur de tension, ladite tension alternative variable étant appliquée à l'enroulement primaire du transformateur et la lampe (L) étant raccordée à son enroulement secondaire.

Eventuellement, le circuit comprend des moyens pour engendrer aux bornes d'au moins un condensateur ($C_1$, $C_2$) et appliquer à la lampe (L) des premières impulsions de tension destinées à l'amorçage de la lampe et des secondes impulsions de tension destinées au maintien de l'arc dans la lampe amorcée, à partir d'un courant traversant au moins une inductance ($L_1$, $P_T$), sous le contrôle de moyens interrupteurs comprenant au moins deux interrupteurs ($T_1$, $T_2$) commandés en fonction de la valeur du courant circulant dans la lampe.

Application à l'alimentation des lampes de projecteurs de véhicules automobiles.

FIG.1

## CIRCUIT D'ALIMENTATION D'UNE LAMPE A ARC, NOTAMMENT POUR UN PROJECTEUR DE VEHICULE AUTOMOBILE.

La présente invention concerne d'une façon générale un circuit d'alimentation d'une lampe à arc, notamment d'une lampe à arc pour un projecteur de véhicule automobile.

Il est bien connu qu'une lampe à arc, du fait de son type de fonctionnement particulier, nécessite pour son alimentation des conditions très spécifiques. On peut en effet distinguer dans le fonctionnement d'une telle lampe trois phases. Tout d'abord, pour allumer la lampe, il est nécessaire de lui appliquer une tension élevée, de préférence alternative, d'une amplitude de l'ordre de 9 à 12 kV.

Une fois que l'arc est amorcé, il faut assurer temporairement un courant élevé sous une tension faible pour amener la lampe le plus rapidement possible à sa température nominale (cette exigence étant particulièrement importante en éclairage automobile).

Enfin, une fois cette température atteinte, la lampe doit être alimentée sous une tension semblable mais sous une intensité plus faible.

Un montage connu pour tenter d'approcher les conditions ci-dessus comprend un générateur de tension alternative, de l'ordre de quelques dizaines de volts et à fréquence variable. La sortie du générateur attaque un circuit résonnant LC, la lampe étant reliée aux bornes du condensateur.

Pour l'amorçage, on choisit la fréquence du générateur de manière à se situer dans la zone de résonnance du circuit LC. Une surtension appropriée est alors engendrée aux bornes de la lampe. Dès que l'arc est amorcé, la fréquence du générateur est abaissée de manière à s'écarter des conditions de résonance, ce qui abaisse la tension aux bornes de la lampe.

Un tel circuit présente, en particulier dans le domaine des véhicules automobiles, un inconvénient majeur en ce sens que, lors de la montée en tension destinée à l'amorçage, on assiste également à la circulation d'un courant considérable dans l'inductance et le condensateur.

En pratique, on atteint pendant cette phase une consommation de l'ordre de 250 watts qui, si la durée nécessaire à l'allumage vient à se prolonger, est incompatible avec l'énergie électrique disponible à bord d'un véhicule.

En outre, un tel montage nécessite un condensateur capable de tenir la haute tension appliquée à la lampe, ce qui est désavantageux du point de vue du coût et de l'encombrement.

La présente invention vise à pallier ces inconvénients de la technique antérieure et à proposer un circuit d'alimentation qui ne consomme qu'une énergie électrique limitée, de l'ordre de quelques dizaines de watts, pendant la phase d'amorçage, et qui ne nécessite pas de condensateur à très haute tension de claquage. Plus généralement, la présente invention vise à proposer un circuit économique, utilisant des composants simples et peu onéreux, qui soit cependant capable de fournir avec une grande souplesse les tensions nécessaires pour les diverses phases de fonctionnement.

A cet effet, la présente invention propose un circuit d'alimentation pour une lampe à arc, notamment pour un projecteur de véhicule automobile, caractérisé en ce qu'il comprend :

des moyens pour engendrer, à partir d'une source de basse tension continue telle que la batterie du véhicule, une tension alternative d'amplitude variable en fonction de l'état de la lampe, et

un transformateur élévateur de tension, ladite tension alternative variable étant appliquée à l'enroulement primaire du transformateur et la lampe étant raccordée aux bornes de l'enroulement secondaire du transformateur directement ou par l'intermédiaire d'éléments non inductifs.

Selon un second aspect, l'invention concerne un circuit d'alimentation pour une lampe à arc, notamment pour un projecteur de véhicule automobile, caractérisé en ce qu'il comprend :

des moyens pour engendrer aux bornes d'au moins un condensateur et appliquer à la lampe des premières impulsions de tension destinées à l'amorçage de la lampe et des secondes impulsions de tension destinées au maintien de l'arc dans la lampe amorcée, à partir d'un courant traversant au moins une inductance, sous le contrôle de moyens interrupteurs comprenant au moins deux interrupteurs commandés en fonction de la valeur du courant circulant dans la lampe.

Avantageusement, les moyens générateurs comprennent un premier générateur comportant un montage série d'une inductance et du premier condensateur relié aux bornes d'une source de tension continue, le premier interrupteur commandé étant monté en parallèle avec ledit premier condensateur, et un second générateur comportant un montage série de ladite inductance, de l'enroulement primaire d'un transformateur et du second condensateur également relié aux bornes de ladite source de tension, le second interrupteur commandé étant monté en parallèle avec le second condensateur, et la lampe est montée aux bornes de l'enroulement secondaire du transformateur.

D'autres aspects, buts et avantages de la présente invention apparaîtront mieux à la lecture de la description détaillée suivante de formes de réalisation préférées de celle-ci, donnée à titre d'exemple et faite en référence aux dessins annexés, sur lesquels :

- la figure 1 est un schéma d'une première réalisation pratique d'un circuit d'alimentation de lampe à arc conforme à l'invention,

- les figures 2a à 2c sont des chronogrammes illustrant le fonctionnement du circuit de la figure 1,

- la figure 3 est une vue schématique d'un circuit de commande pour le circuit d'alimentation de la figure 1,

- la figure 4 représente un schéma partiel d'une première variante de réalisation du circuit d'alimentation de la figure 1,

- la figure 5 est un chronogramme illustrant un autre type de fonctionnement du circuit de la figure 1,

- la figure 6 est un schéma d'un circuit d'alimentation de lampe selon une seconde variante de l'invention,

- la figure 7 est un chronogramme illustrant un mode particulier de fonctionnement du circuit de la figure 6, et

- la figure 8 est un schéma partiel d'un circuit selon une troisième variante de l'invention.

On notera tout d'abord que, d'une figure à l'autre, des éléments ou parties identiques ou similaires sont désignés autant que possible par les mêmes numéros de référence.

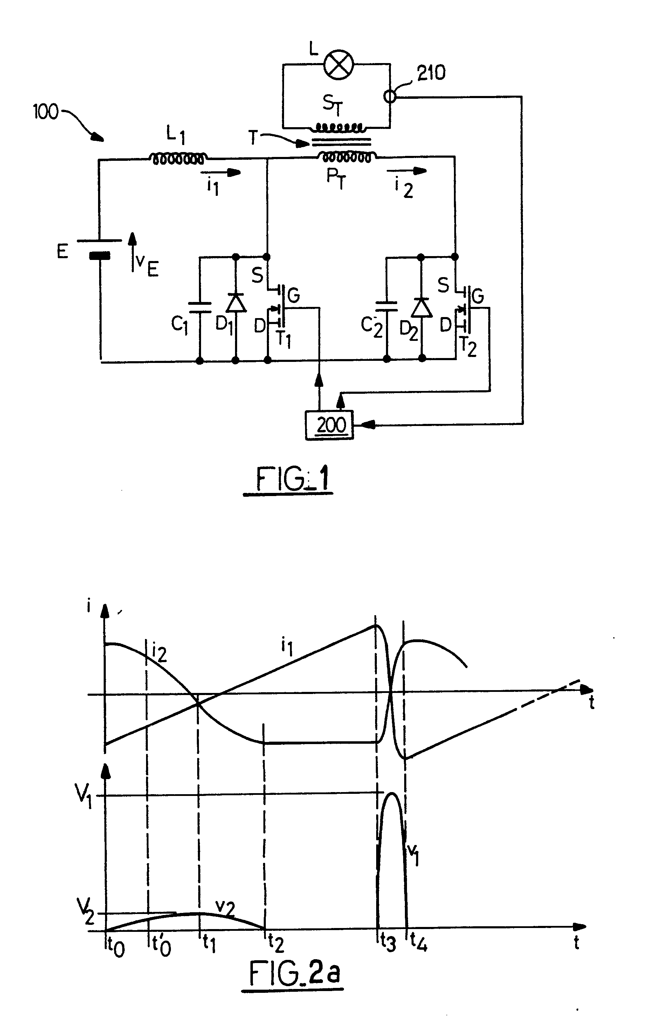

On va décrire tout d'abord une forme de réalisation de base de l'invention, en référence à la figure 1.

Une première borne d'un inductance $L_1$ est reliée à la borne positive d'une source de basse tension continue E (notamment la batterie du véhicule sur lequel le circuit et la lampe sont montés) tandis que la seconde borne de $L_1$ est reliée d'une part à la première borne de l'enroulement primaire $P_T$ d'un transformateur T, et d'autre part à la cathode d'une première diode $D_1$ et à la première borne d'un premier condensateur $C_1$. La seconde borne de $C_1$ et l'anode de $D_1$ sont reliées à la borne négative de E. Un premier transistor à effet de champ (TEC) $T_1$ a sa source reliée à la cathode de $D_1$ et à la première borne de $C_1$ et son drain relié à la borne négative de E, sa grille étant reliée à une première borne de sortie d'un circuit de commande indiqué schématiquement en 200.

La seconde borne du primaire $P_T$ de T est reliée à la première borne d'un second condensateur $C_2$, à la cathode d'une seconde diode $D_2$ et à la source d'un second TEC $T_2$. Ces trois composants sont également montés en parallèle et la seconde borne de $C_2$, l'anode de $D_2$ et le drain de $T_2$ sont tous trois reliés à la borne négative de E.

La grille de $T_2$ est reliée à une seconde borne de sortie du circuit de commande 200.

La lampe L est montée entre les bornes de l'enroulement secondaire $S_T$ du transformateur T.

Enfin au circuit 200 est relié un détecteur 210 du courant dans le secondaire $S_T$ de T.

Conformément à un aspect essentiel de l'invention, $T_1$ et $T_2$, tenant lieu d'interrupteurs commandés, sont ouverts et fermés sous le contrôle du circuit 200 en fonction de l'état de fonctionnement de la charge L du circuit.

Initialement, L n'est pas allumée et présente une impédance $Z_L$ infinie, du fait qu'aucun arc n'est établi entre ses électrodes.

Pendant cette phase, on souhaite obtenir une tension alternative élevée aux bornes de L, pour son amorçage. Cela s'effectue de la façon suivante, référence état faite simultanément à la figure 1 et à la figure 2a.

On va supposer initialement qu'on est en régime permanent, c'est-à-dire que $D_1$ est conductrice, qu'un courant négatif noté $i_1$ (le sens positif étant illustré par les flèches sur la figure 1) traverse $L_1$ et qu'un courant magnétisant positif $i_2 = i_\mu$ traverse $P_T$.

A l'instant initial $t_0$, le courant positif qui traversait $P_T$ charge $C_2$ et diminue, la boucle constituée par $P_T$, $C_2$, $T_1$ et $D_1$ étant fermée sur elle-même grâce à la conduction de $D_1$. La tension $v_2$ dans $C_2$ croît alors jusqu'à un maximum $V_2$, puis diminue jusqu'à zéro. Dans le même temps, $i_1$ croît linéairement en fonction du temps et devenant positif, le circuit E, $L_1$, $D_1$ étant également fermé.

Par ailleurs, le circuit 200 est apte à fermer $T_1$ à tout instant approprié pendant lequel $D_1$ conduit (par exemple à l'instant $t_0'$ sur la figure 2a). Cette ouverture n'a aucune influence concrète, car $D_1$ conduisait déjà et continue à conduire.

Lorsque le courant dans $D_1$ s'annule ($i_2 = i_1$) à l'instant $t_1$, $D_1$ se bloque et la conduction est alors assurée par $T_1$.

Lorsque, après inversion du courant $i_2$, $v_2$ devient nulle (instant $t_2$), $D_2$ devient passante, et $P_T$ se trouve donc court-circuité à travers $D_2$ et $T_1$. Le courant $i_2$ reste alors constant (aux pertes près), à une valeur négative.

Dans un deuxième temps (instant $t_3$), on ouvre $T_1$ et on ferme $T_2$. Les courants $i_1$ et $i_2$ chargent alors rapidement $C_1$ dont la tension $v_1$ croît fortement jusqu'à un maximum (surtension $V_1$), les valeurs de $i_1$ et $i_2$ diminuant alors rapidement.

$v_1$ diminue ensuite jusqu'à 0, tandis que les intensités $i_1$ et $i_2$ se sont approximativement inversées.

$D_1$ devient alors à nouveau conductrice. $i_1$ croît alors linéairement comme décrit plus haut, tandis que $i_2$ reste essentiellement constant, étant donné que les bornes de $P_T$ sont court-circuitées via $D_1$ et $T_2$.

On se retrouve à l'instant $t_4$ dans l'état initial décrit plus haut, et le cycle est répété en ouvrant $T_2$ audit instant $t_4$ et en fermant $T_1$ un instant déterminé plus tard.

Ainsi, au cours de chaque cycle, on applique aux bornes de $P_T$ la surtension $V_1$ engendrée dans $C_1$, via $T_2$ alors fermé.

En choisissant de façon appropriée les valeurs des composants et le rapport d'élévation de T, on engendre ainsi aux bornes de L la haute tension alternative nécessaire à son amorçage.

(Il est à noter qu'en choisissant des composants capables de tenir les tensions élevées à appliquer à la lampe pour son amorçage, on peut se passer de l'élévation de tension apportée par le transformateur T et omettre celui-ci.)

Par exemple, avec $v_E$ = 24 volts, on peut engendrer une surtension $V_1$ de l'ordre de 1 kV et, avec un rapport d'élévation m = 10 dans T, on engendre aux bornes de L une succession de brefs pics de surtension, d'une valeur d'environ 10 kV, ce qui provoque au bout d'un certain nombre de cycles son amorçage.

On peut noter ici que $T_1$ doit être choisi pour supporter une relativement haute tension positive ($\approx V_1$) à ses bornes, et pour être rapide en blocage.

Il peut toutefois être présenter une résistance à l'état passant relativement élevée (par exemple 6 à 7 $\Omega$) car il ne conduit qu'un courant limité.

Au contraire $T_2$ n'est exposé à aucune tension élevée et peut être relativement lent à la commutation. Mais il doit présenter de faibles pertes en conduction, car il est traversé par le courant maximum nominal du convertisseur.

Ainsi, on peut utiliser des transistors relativement économiques, car aucun ne nécessite simultanément des qualités de bonne conduction, de rapidité et de capacité à supporter des tensions élevées.

On peut noter en outre que, dans la phase d'amorçage décrite plus haut, la commutation de $T_1$ et $T_2$ est douce : à l'ouverture, ils ont chacun à leurs bornes un condensateur déchargé et à la fermeture, ils ont chacun à leurs bornes une diode en conduction.

On minimise ainsi les pertes par commutation et de ce fait l'échauffement de $T_1$ et de $T_2$.

Enfin on notera qu'il est nécessaire à chaque fois d'assurer que $T_2$ soit fermé un bref instant avant l'ouverture de $T_1$, afin que $T_2$ ne soit pas détruit par les impulsions de tension engendrées par $T_1$.

Lorsque la phase d'amorçage a amorcé la lampe, celle-ci présente maintenant un arc entre ses électrodes et a une résistance donnée $r_L$. Un courant circule dans le secondaire du transformateur, ce courant ramené au primaire étant noté $i_L$. On a donc $i_2$ égal à $i_L + i_\mu$.

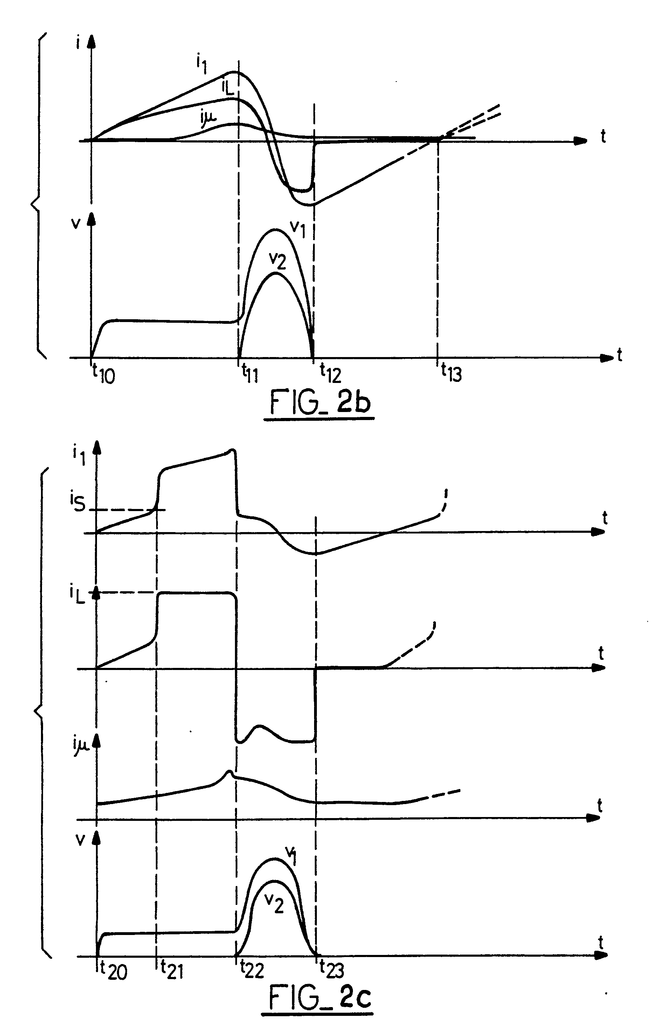

On va décrire ci-dessous le fonctionnement du circuit dans cette seconde phase, en référence aux figures 1, 2b et 2c.

Tout d'abord, dès que le détecteur 210 a détecté cet amorçage, $T_2$ doit maintenu fermé pendant une durée suffisante pour faire face à l'appel de courant dans le transformateur, et plus précisément pour fournir à la lampe le courant nécessaire pour l'établissement stable de l'arc. Pendant cette phase intermédaire, $T_1$ est maintenu ouvert.

A la suite de cette phase, on excite $T_2$ avec une commande à rapport cyclique élevé, pour le rendre alternativement ouvert et fermé.

Selon que la self $L_1$ ne sature pas ou sature, le montage fonctionne selon deux principes différents (respectivement figures 2b et 2c).

Tout d'abord (instant $t_{10}$ sur la figure 2b), $T_2$ est fermé. Lorsque $L_1$ n'est pas saturée, le courant $i_1$ croît à travers $L_1$ , $P_T$ et L. $D_1$ est polarisée en inverse et ne conduit pas.

Lorsque l'on ouvre $T_2$ (instant $t_{11}$), on peut considérer que $L_1$ se "décharge" dans le montage constitué de la mise en parallèle de $C_1$ d'une part et du montage série d'une résistance égale à $r/m^2$ et de $C_2$ d'autre part. $i_1$ diminue donc assez rapidement. Le courant $i_2$ diminue également, relativement lentement. Lorsque la tension aux bornes de $C_1$ devient nulle, $D_1$ se met à conduire (instant $t_{12}$). Pratiquement au même instant, la tension sur $C_2$ s'annule et $D_2$ devient conductrice.

L'enroulement $P_T$ est donc court-circuité et la tension aux bornes de la charge est nulle.

Puis à l'instant $t_{13}$, on ferme à nouveau $T_2$, si bien que l'on se retrouve dans les conditions de $t_{10}$.

Le chronogramme de la figure 2b montre que l'on applique ainsi à la lampe des pics de tension relativement étroits, avec une valeur de tension relativement faible, par exemple de l'ordre de 80 volts, aux bornes de la lampe (phase de chauffage de la lampe). Du fait que $C_1$ et $C_2$ sont vus par le transformateur comme deux condensateurs en série dans lesquels sont stockées des tensions de signes inverses, la tension appliquée au primaire du transformateur est égale à la différence entre $v_1$ et $v_2$.

La valeur efficace du courant $i_L$ dans la lampe peut être réglée en modifiant la fréquence de commande de $T_2$ : lorsque cette fréquence est augmentée, la valeur efficace de $i_L$ diminue, comme on le conçoit bien à partir du chronogramme de la figure 2b.

En fonctionnement inductance $L_1$ saturée, et maintenant en référence à la figure 2c, le comportement du montage est modifié comme suit : lorsque, lors de la phase de croissance du courant telle que décrite en référence à la figure 2b, $i_1$ atteint le courant de saturation $i_S$ (instant $t_{21}$), $L_1$ devient pratiquement un court-circuit. $i_1$ est alors la

somme du courant $i_L = Em^2/r$ dans la lampe et du courant magnétisant $i_\mu$, qui croît linéairement avec le temps.

Lors de l'ouverture de $T_2$ (instant $t_{22}$), $i_L$ diminue très rapidement en raison de la désaturation de $L_1$. On assiste ensuite à la charge de $C_1$ et de $C_2$ par le courant $i_1$, comme précédemment, le retour à tension nulle de ces condensateurs s'effectuant à l'instant noté $t_{23}$.

On peut noter ici que les courants $i_L$ tracés sur les chronogrammes des figures 2a à 2c sont en fait les courants dans la lampe ramenés au primaire.

Dans ces deux modes de fonctionnement ($L_1$ non saturée et saturée), l'intensité efficace du courant dans la charge peut être modifiée par changement de la fréquence de commutation de $T_2$. On peut ainsi aisément, pendant la phase qui suit l'amorçage de la lampe, faire fonctionner celle-ci sous un courant supérieur au courant nominal, pendant une durée déterminée de l'ordre de quelques secondes, pour l'amener aussi rapidement que possible à sa température de fonctionnement nominale.

Par ailleurs, dans ces deux modes de fonctionnement également, les commutations de $T_2$ se font de façon douce, comme décrit plus haut en référence à la figure 2a.

En corollaire, l'instant auquel on ferme $T_2$ n'est pas critique, dans la mesure où cette mise en conduction s'effectue pendant que $D_2$ conduit.

On va indiquer ci-dessous des valeurs possibles pour les composants sensibles du montage de la figure 1 (avec $V_E = 24$ V) :
$C_1 = 0,7$ nF; $C_2 = 470$ nF; $L_1 = 0,3$ mH et $P_T = >0,3$ mH (inductance de magnétisation).

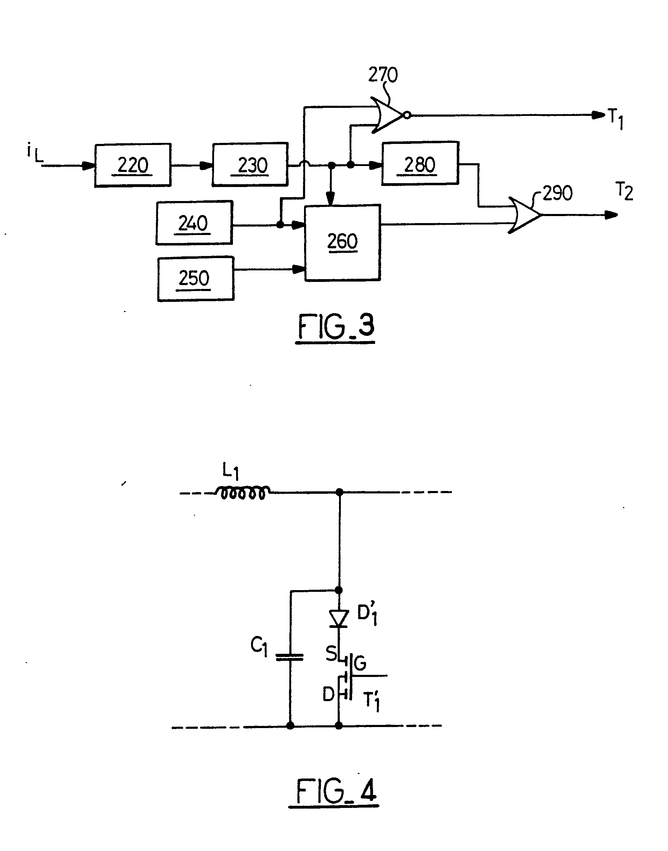

On a illustré sur la figure 3 le schéma de principe d'un circuit 200 pour la commande de $T_1$ et $T_2$. L'élément 220 est un détecteur de courant auquel est appliqué un signal représentatif de la valeur de $i_L$. Il applique à un circuit monostable réamorçable 230 un signal logique représentatif de la position de $i_L$ par rapport à un seuil donné, par exemple de l'ordre de 120 mA. Les sorties de deux oscillateurs 240 et 250 à forme d'onde rectangulaire, de fréquences prédéterminées, sont appliquées à deux entrées d'un multiplexeur 260, la sélection de l'une ou l'autre des deux fréquences s'effectuant à l'aide du signal de sortie du monostable 230, appliqué à l'entrée de sélection du multiplexeur.

Une porte NON-OU 270 reçoit les signaux issus du premier oscillateur 240 et du monostable 230, et sa sortie est appliquée à la grille de $T_1$.

Enfin un second monostable 280 reçoit les signaux issus du monostable 230 et sa sortie est reliée à une première entrée d'une porte OU 290, dont l'autre entrée est reliée à la sortie du multiplexeur 260. La sortie de la porte 290 tient lieu de signal de commande de $T_2$.

Un tel circuit permet, dans le mode d'amorçage, d'appliquer aux grilles des deux transistors des signaux rectangulaires complémentaires à la fréquence $f_1$ qui est celle du premier oscillateur 240, en assurant toutefois, par des moyens connus non représentés, un léger retard de l'ouverture de $T_1$ par rapport à la fermeture de $T_2$.

Le détecteur 220 détecte l'amorçage de la lampe et, via les circuits 280 et 290, assure immédiatement la conduction de $T_2$ pendant une durée déterminée, afin de faire face à cet instant à l'appel de courant important dû à l'établissement de l'arc.

A la suite de cela, $T_1$ est ouvert et $T_2$ est commandé à la fréquence $f_2$ fournie par le second oscillateur 250 ($f_2 < f_1$), avec un rapport cyclique élevé obtenu au sein dudit oscillateur.

Dès que la lampe est éteinte, le détecteur 220 bascule à nouveau et fait passer le circuit de commande en mode d'amorçage, après un certain délai fixé par le monostable 230.

On a illustré sur la figure 4 une variante de réalisation du circuit d'alimentation de la figure 1. Dans cette variante, le montage de $T_1$ et de $D_1$ en parallèle est remplacé par le montage série de $D'_1$ et de $T'_1$, l'anode de cette diode étant reliée à la seconde borne de $L_1$ et sa cathode étant reliée à la source de $T'_1$.

Cette modification du montage a deux conséquences majeures :
tout d'abord, lorsque la lampe est amorcée, il existe avec le montage de la figure 1 des périodes de temps pendant lesquelles aucun courant ne traverse la lampe, ce qui peut dans certains cas conduire à son désamorçage.

Au contraire, avec le montage de la figure 4, lorsque $T_1$ est ouvert, la diode n'est plus apte à venir court-circuiter les bornes du condensateur associé. En pratique, cela se traduit par le fait que ce condensateur accumule des tensions aussi bien positives que négatives, qui seront appliquées au primaire du transformateur.

Concrètement, cela se manifeste par le fait que la demi-onde unique de la tension $v_1$ présente sur les figures 2b et 2c se poursuit dans le temps sous forme d'une tension alternative approximativement sinusoïdale, centrée sur zéro, qui va s'atténuer progressivement et qui va être supprimée dès la nouvelle fermeture de $T_2$.

Une autre conséquence de cette modification du montage tient en ce que la diode $D'_1$ n'est plus à même de jouer le rôle de la diode $D_1$ de la figure 1 au cours de l'amorçage. La commande de $T'_1$ doit alors être modifiée en conséquence si l'on souhaite conserver une commutation douce.

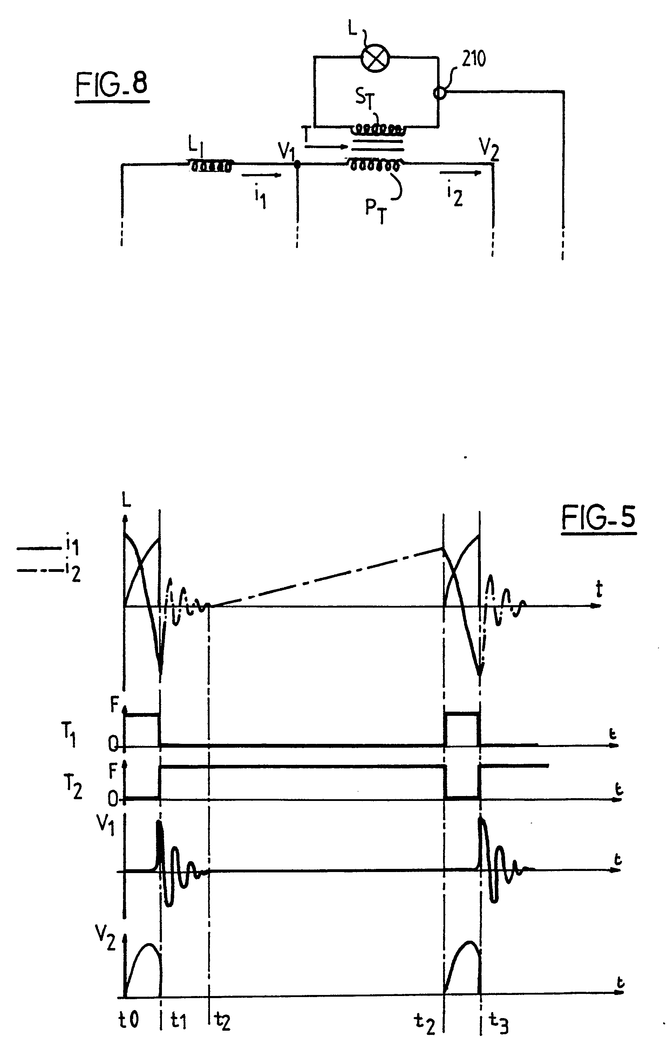

On va maintenant décrire en référence à la figure 5 une variante de fonctionnement du circuit de la figure 1 dans le mode initial d'amorçage de l'arc.

On se place dans une situation initiale (instant $t_0$) dans laquelle $i_1$, $V_1$ et $V_2$ sont nuls, tandis que $i_2$ a une valeur positive (obtenue comme expliqué plus loin).

A l'instant $t_0$, le circuit 200 ouvre $T_2$ et ferme $T_1$. Il en résulte que $i_1$ croît progressivement dans le circuit fermé ($E$, $L_1$), $V_1$ restant nulle. Dans le même temps, $i_2$ décroît assez rapidement, $C_2$ se chargeant et $V_2$ augmentant en conséquence, puis $C_2$ commence à se décharger ($i_2$ devient négatif et $V_2$ diminue).

$V_2$ et $i_2$ évolueraient normalement sous forme de sinusoïdales amorties mais, à l'instant $t_1$, antérieur à la fin du premier demi-cycle de la sinusoïde, le circuit 200 ouvre $T_1$ et ferme $T_2$. $V_2$ passe alors instantanément à zéro, et de même $i_1$ décroît très rapidement. Dans le même temps, $V_1$ croît très brutalement jusqu'à une valeur très élevée, par la charge de $C_1$ à l'aide du courant $i_2$ de décharge de $C_2$. Et le pic de haute tension positive $V_1$ ainsi que le courant $i_2$ initialement négatif évoluent alors jusqu'à zéro (instant $t_1'$) sous forme de sinusoïdales amorties dans le circuit ($C_1$, $P_T$, $T_2$).

Ensuite, $T_1$ et $T_2$ restant dans le même état, le courant $i_2$ croît à nouveau essentiellement linéairement à travers $P_T$ et $T_2$. A l'instant $t_2$, on retrouve la même situation qu'à $t_0$ et un nouveau cycle commence.

Ainsi la phase initiale du cycle (entre $t_0$ et $t_1$) provoque l'accumulation d'une énergie électrique dans la boucle ($T_1$, $P_T$, $C_2$), $V_2$ et $i_2$ étant en forme de sinusoïdes amorties dont la fréquence est déterminée par les valeurs de $C_2$ et $P_T$ et dont seulement un peu moins de la moitié d'un cycle se développe pendant cette phase.

Ensuite, lors de l'ouverture de $T_1$ et de la fermeture de $T_2$ à l'instant $t_1$, on utilise la forte valeur du courant de décharge lors de la première oscillation pour provoquer une surtension $V_1$ très énergétique aux bornes de $T_1$, grâce à son ouverture brutale.

Et le choix de l'instant $t_1$ permet de contrôler de manière tout à fait simple la valeur de cette surtension.

A titre d'exemple, avec une tension d'alimentation $V_E$ de 12 volts, une inductance de l'ordre de 100 à 200 $\mu$H pour $P_T$, une capacité de l'ordre de 100 à 500 nF pour $C_2$, et une fréquence de commande de l'ordre de 1 à 5 kHz, on peut obtenir une impulsion de haute tension de l'ordre de 1 kV aux bornes de $P_T$ (et par exemple environ 10 kV aux bornes de L après élévation par le transformateur T), avec une énergie de l'ordre de 10 mJ, c'est-à-dire sensiblement supérieure à celle obtenue avec la commande décrite en référence à la figure 2a.

On observe sur la figure 5 que l'impulsion de la tension $V_1$ formée aux bornes de $C_1$ après l'ouverture de $T_1$ se compose d'une succession d'impulsions très courtes d'une sinusoïde amortie, dont la fréquence assez élevée est déterminée par les valeurs de $C_1$ et de l'inductance de $P_T$.

Il est à noter que le mode de fonctionnement décrit ci-dessus fait appel à une fermeture de $T_1$ de courte durée par rapport à la fermeture de $T_2$, par opposition au fonctionnement de la figure 2a.

Un avantage essentiel de cette variante réside en ce que la self $L_1$ n'intervient pas dans l'obtention de la surtension, seule la self constituée par l'enroulement $P_T$ étant en jeu et devant accepter des courants importants. Ainsi $L_1$, qui a pour seul objet d'éviter de mettre la batterie E en court-circuit lors de la fermeture de T1, peut être réalisée très économiquement.

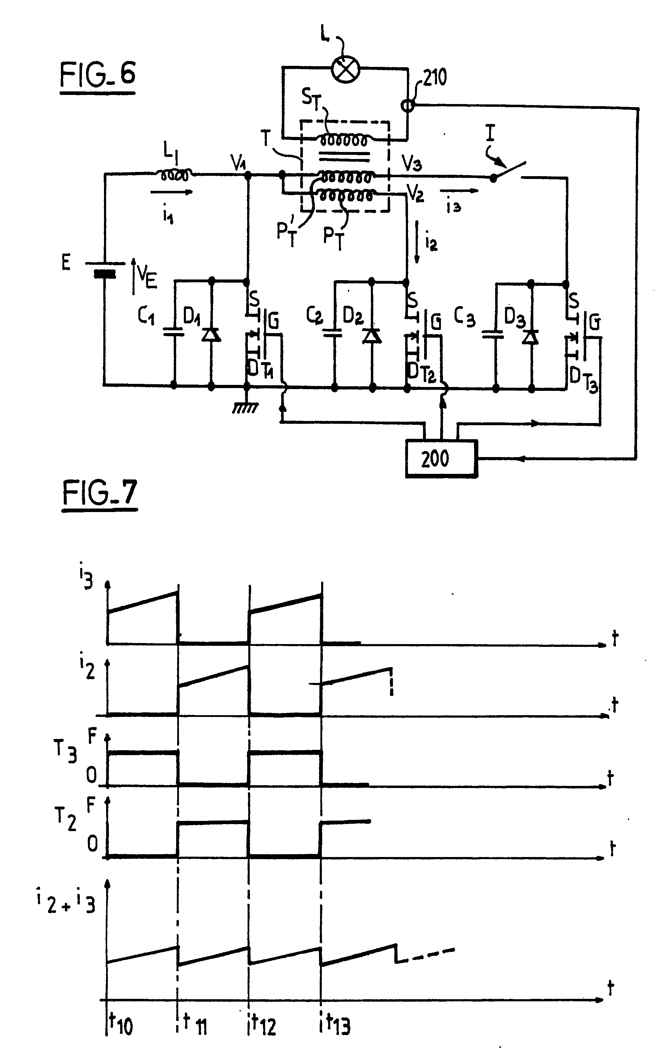

On va maintenant décrire en référence à la figure 6 une variante du circuit d'alimentation de la figure 1.

Il se compose pour l'essentiel des mêmes éléments que celui de la figure 1, qui sont désignés par les mêmes références et ne seront pas décrits à nouveau. Ces éléments sont complétés par un deuxième enroulement primaire $P_T'$ de T, qui est relié d'une part à la jonction entre $L_1$ et $P_T$ et d'autre part à une première borne d'un interrupteur I. La seconde borne de I est reliée à une première borne d'un troisième condensateur $C_3$, à la cathode d'une troisième diode $D_3$ et à la source d'un troisième TEC $T_3$. La seconde borne de $C_3$, l'anode de $D_3$ et le drain de $T_3$ sont reliés à la masse. La grille de $T_3$ est reliée au circuit 200.

Dans le mode d'amorçage tel que décrit plus haut en référence à la figure 5, l'interrupteur I est ouvert, et $C_3$, $D_3$ et $T_3$ ne jouent aucun rôle. L'interrupteur I doit bien entendu être choisi de manière à pouvoir supporter les hautes tensions engendrées pendant cette phase.

Dans les modes de chauffage et le mode stationnaire subséquent, I est fermé, $T_1$ est ouvert en permanence et, conformément à la présente invention, $T_2$ et $T_3$ sont commandés par le circuit 200 en opposition de phase, selon un mode "push-pull".

Comme on montre la figure 7, on établit ainsi alternativement dans $P_T$ et $P_T'$ des courants, respectivement $i_2$ et $i_3$, évoluant à une vitesse relativement lente déterminée par les valeurs des inductances (identiques) de $P_T$ et de $P_T'$ et des condensateurs $C_2$ et $C_3$. On obtient ainsi dans le secondaire de la lampe un courant (ramené au primaire : $i_2 + i_3$) relativement stable, avec un facteur de forme compatible avec la technologie des semi-conducteurs de puissance économiques.

Dans la phase de chauffage de la lampe, on cherche à appliquer à la lampe une intensité la plus élevée possible, et ceci est obtenu en com-

mandant $T_2$ et $T_3$ comme illustré sur la figure 7, la période de fermeture de chacun de ceux-ci occupant pour l'essentiel une demi-période de la commande.

Une fois que la lampe est suffisamment chaude, la valeur efficace du courant est abaissée en diminuant les temps de conduction de $T_2$ et $T_3$, c'est-à-dire en modulant à la baisse la largeur d'impulsion des signaux de commande de fermeture de ces transistors.

On notera ici qu'avec le circuit de la figure 1, le facteur de forme élevée des ondes appliquées à la lampe pendant la phase d'échauffement, en conjonction avec un courant extrêmement élevé dans le primaire du transformateur et dans $T_2$ - (typiquement de l'ordre de 30 ampères), nécessite de choisir pour $T_2$ un composant ayant à la fois une intensité admissible élevée et un bon comportement en commutation, ce qui le rend relativement coûteux. La variante de la figure 6 permet, par l'ajout de $T_3$, de limiter ces exigences pour $T_2$ et d'utiliser un composant plus économique.

L'homme de l'art saura aisément modifier le circuit de commande décrit plus haut en référence à la figure 4 pour l'appliquer à la configuration du circuit d'alimentation de la figure 6, en prévoyant deux oscillateurs déphasés de 180°, avec un une commande de largeur d'impulsion ou de fréquence commune.

On va maintenant décrire une autre variante du circuit de la figure 1, en référence à la figure 8. Selon cette variante, un condensateur $C'$ est branché en série avec la lampe L. le fonctionnement du circuit de cette variante est le suivant:

Pendant la phase d'amorçage, aucun courant ne circule dans le secondaire de T, l'arc n'étant pas établi. Il en résulte que $C'$ reste en permanence déchargé et présente à ses bornes une tension nulle.

Les pics de tension d'amorçage, établis comme par exemple décrit plus haut par un cadencement approprié de $T_1$ et $T_2$, sont donc normalement appliqués à L.

En revanche, lorsqu'un arc est établi dans la lampe, un courant important tend à s'y établir. La détection de ce courant par le détecteur 210 amène le circuit de commande à ouvrir en permanence $T_1$ et à ouvrir $T_2$ selon une commande à rapport cyclique élevé, comme décrit plus haut, pour provoquer la mise en température de la lampe sous un courant relativement élevé.

Pendant cette phase de chauffage, la capacité $C'$ et l'inductance de fuite du secondaire $S_T$ du transformateur, ainsi que la capacité parasite aux bornes du primaire $P_T$, forment un circuit résonnant.

En bref, ce circuit résonnant fonctionne de la façon suivante : pendant que l'inductance $L_1$ n'est pas saturée, il apparaît un transfert de l'énergie existant dans l'inductance magnétisante $L_\mu$ du transformateur (courant $i_\mu$) vers le condensateur $C'$, qui se charge.

En revanche, pendant la phase où $L_1$ est saturée, cette énergie accumulée dans $C'$ est restituée à la lampe, son courant de décharge étant appliqué à la lampe pour alimenter son arc.

En corollaire, la présence du condensateur $C'$ permet d'éviter qu'une composante continue du courant ne s'instaure dans le secondaire du transformateur.

Bien entendu, la présente invention n'est pas limitée aux formes de réalisation décrites et représentées, mais l'homme de l'art saura y apporter toute variante ou modification conforme à son esprit. En particulier, les divers modes de réalisation décrits peuvent être combinés entre eux comme souhaité.

## Revendications

1. Circuit d'alimentation pour une lampe à arc, notamment pour un projecteur de véhicule automobile, caractérisé en ce qu'il comprend :
des moyens (10; 100) pour engendrer, à partir d'une source de basse tension continue telle que la batterie du véhicule, une tension alternative d'amplitude variable en fonction de l'état de la lampe, et un transformateur (T) élévateur de tension, ladite tension alternative variable étant appliquée à l'enroulement primaire du transformateur et la lampe (L) étant raccordée aux bornes de l'enroulement secondaire du transformateur directement ou par l'intermédiaire d'éléments non inductifs.

2. Circuit d'alimentation pour une lampe à arc, notamment pour un projecteur de véhicule automobile, caractérisé en ce qu'il comprend :
des moyens pour engendrer aux bornes d'au moins un condensateur ($C_1,C_2$) et appliquer à la lampe (L) des premières impulsions de tension destinées à l'amorçage de la lampe et des secondes impulsions de tension destinées au maintien de l'arc dans la lampe amorcée, à partir d'un courant traversant au moins une inductance ($L_1,P_T$; $P_T$), sous le contrôle de moyens interrupteurs comprenant au moins deux interrupteurs ($T_1$, $T_2$) commandés en fonction de la valeur du courant circulant dans la lampe.

3. Circuit selon la revendication 2, caractérisé en ce qu'il comprend deux condensateurs ($C_1,C_2$) auxquels sont respectivement associés deux interrupteurs commandés ($T_1,T_2$).

4. Circuit selon la revendication 3, caractérisé en ce que les moyens générateurs comprennent un premier générateur comportant un montage série d'une inductance ($L_1$) et du premier condensa-

teur ($C_1$) relié aux bornes d'une source de tension continue (E), le premier interrupteur commandé ($T_1$) étant monté en parallèle avec ledit premier condensateur, et un second générateur comportant un montage série de ladite inductance, de l'enroulement primaire ($P_T$) d'un transformateur et du second condensateur ($C_2$) également relié aux bornes de ladite source de tension, le second interrupteur commandé ($T_2$) étant monté en parallèle avec le second condensateur, et en ce que la lampe (L) est montée aux bornes de l'enroulement secondaire ($S_T$) du transformateur.

5. Circuit selon la revendication 4, caractérisé en ce qu'il est prévu en outre des première et seconde diodes ($D_1$, $D_2$) montées en parallèle avec le premier condensateur et le premier interrupteur commandé et avec le second condensateur et le second interrupteur commandé, respectivement.

6. Circuit selon la revendication 4, caractérisé en ce que le premier générateur comprend en outre une première diode ($D'_1$) montée en série avec le premier interrupteur commandé.

7. Circuit selon la revendication 4 ou 5, caractérisé en ce que, pendant une phase d'amorçage de la lampe, les premier et second interrupteurs sont commandés par des tensions rectangulaires essentiellement complémentaires à une première fréquence ($f_1$).

8. Circuit selon la revendication 7, caractérisé en ce que, pendant une phase ultérieure de maintien de la lampe, le premier interrupteur est ouvert et le second interrupteur est commandé par un signal rectangulaire à rapport cyclique élevé et à une seconde fréquence ($f_2$) inférieure à la première.

9. Circuit selon la revendication 8, caractérisé en ce qu'il comprend des moyens pour faire varier ladite seconde fréquence ($f_2$) et donc l'intensité efficace traversant la lampe pendant ladite phase de maintien.

10. Circuit selon la revendication 4 ou 5, caractérisé en ce que, pour établir une succession d'impulsions de haute tension aux bornes de la lampe en vue de son amorçage, les moyens interrupteurs sont commandés cycliquement pour déterminer une première phase pendant laquelle le premier moyen interrupteur ($T_1$) est fermé et le second moyen interrupteur ($T_2$) est ouvert, pour charger ledit second condensateur ($C_2$) puis établir dans ledit premier moyen interrupteur un courant inverse de décharge du second condensateur, et une seconde phase pendant laquelle le premier moyen interrupteur ($T_1$) est brusquement ouvert tandis que le second moyen interrupteur ($T_2$) est fermé, pour engendrer aux bornes du premier condensateur ($C_1$) et appliquer à l'enroulement primaire ($P_T$) du transformateur une impulsion énergétique de haute tension résultant de la charge du premier condensateur par ledit courant de décharge.

11. Circuit selon la revendication 10, caractérisé en ce que, subséquemment à l'obtention de l'impulsion de haute tension, la seconde phase est prolongée pour laisser croître un courant dans le second moyen interrupteur ($T_2$) et provoquer la charge du second condensateur ($C_2$) au début de la première phase subséquente.

12. Circuit selon la revendication 4 ou 5, caractérisé en ce qu'il comprend en outre un second enroulement primaire ($P'_T$) du transformateur monté entre la source de tension et une première borne d'un troisième condensateur ($C_3$) dont la seconde borne est reliée à la masse, un troisième moyen interrupteur commandé ($T_3$) étant monté en parallèle avec le troisième condensateur, et en ce que les deuxième et troisième moyens interrupteurs ($T_2$, $T_3$) sont commandés en opposition de phase et avec une durée de fermeture variable pour établir dans la lampe un courant variable en fonction de son état.

13. Circuit selon la revendication 12, caractérisé en ce que, pendant une phase de chauffage de la lampe, une fois l'arc amorcé, la durée de fermeture des deuxième et troisième moyens interrupteurs ($T_2$, $T_3$) est égale à la moitié de la période de commande desdits interrupteurs.

14. Circuit selon l'une des revendications 1 et 4 à 13, caractérisé en ce qu'il comprend en outre un condensateur ($C'$) monté en série avec la lampe (L) dans le circuit secondaire du transformateur (T).

FIG. 1

FIG. 2a

FIG. 2b

FIG. 2c

FIG.3

FIG.4

FIG.8

FIG-5

## FIG_6

## FIG_7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2120870 (DE HSIUNG CHIOU) <br> * figures 1-4 * <br> --- | 1 | H05B41/29 |
| A | DE-A-2934942 (SIEMENS) <br> * page 8, ligne 25 - page 9, ligne 32; figure 2 * <br> --- | 1 | |
| A | EP-A-294605 (PATENT TREUHAND) <br> * le document en entier * <br> ----- | 1 | |

**DOMAINES TECHNIQUES RECHERCHES (Int. Cl.5)**

H05B

Le présent rapport a été établi pour toutes les revendications

| Lieu de la recherche | Date d'achèvement de la recherche | Examinateur |
|---|---|---|
| LA HAYE | 06 JUILLET 1990 | SPEISER P. |